# EUROPEAN PATENT APPLICATION

(11) **EP 2 645 287 A1**
(43) Date of publication of application: **02.10.2013**
(21) Application number: 12161229.5
(22) Date of filing: 26.03.2012
(51) Int. Cl.: G06F 21/31, H04N 21/475, H04N 21/4782, H04N 21/422, H04L 29/08

(54) **Method, computer program and apparatus for switching between user profiles**

(71) Applicant: Uniqoteq Oy, 20520 Turku (FI)
(72) Inventor: Hakunti, Jussi, 20900 Turku (FI); Ijäs, Jari, 02360 Espoo (FI); Tapiola, Antti, 25460 Kisko (FI)
(74) Representative: Papula Oy

(57) **Abstract**

According to one embodiment of the invention, there is provided a method comprising providing, on a graphical user interface, information relating to a first user profile; receiving a selection of a second user profile; and automatically logging out the first user profile in response to the selection.

## Description

### FIELD OF THE INVENTION

The invention relates to a device supporting a graphical user interface. More specifically, the invention relates to switching between user profiles in a device.

### BACKGROUND OF THE INVENTION

Operating systems often include a possibility to create multiple accounts or user profiles for different users. Views on a graphical user interface can then, for example, be customised for each user. For example, a first user may be able to use a different set of programs than a second user, or different access restrictions may be applied to different user profiles or users within a program.

Access to a user account may be restricted by the use of a username and a password. When multiple user accounts have been arranged, a current user has to log herself/himself out first before the next user is able to log in. In other words, after the current user has logged out, it is possible for the next user to select the desired user profile or user account and log in to the profile or account.

Based on the above, there is a need for an improved solution for managing user accounts or user profiles.

### SUMMARY

According to a first aspect of the invention, there is provided a method comprising providing, on a graphical user interface, information relating to a first user profile; receiving a selection of a second user profile; and automatically logging out from the first user profile in response to the selection.

In one embodiment, the method further comprises providing an identification procedure for the selected second user profile after logging out the first user profile; receiving identification information for the second user profile; and providing, on the graphical user interface, information relating to the second user profile when the received identification information is acceptable.

In one embodiment, the method further comprises providing, on the graphical user interface, information relating to the second user profile after logging out the first user profile.

According to a second aspect of the invention, there is provided a computer program comprising program code for implementing the method of the first aspect. In one embodiment, the computer program is embodied on a computer-readable medium.

According to a third aspect of the invention, there is provided an apparatus comprising means for providing, on a graphical user interface, information relating to a first user profile; means for receiving a selection of a second user profile; and means for automatically logging out from the first user profile in response to the selection.

In one embodiment, the apparatus comprises means for providing an identification procedure for the selected second user profile after logging out the first user profile; means for identification login information for the second user profile; and means for providing, on the graphical user interface, information relating to the second user profile when the received identification information is acceptable.

In one embodiment, the apparatus comprises means for providing, on the graphical user interface, information relating to the second user profile after logging out the first user profile.

In one embodiment, the apparatus comprises means for connecting to an external display. In another embodiment, the apparatus comprises a display.

The benefits of the embodiments of the invention are related to improved user interfaces where it is possible to switch between different user profiles quickly, easily and intuitively.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** discloses a block diagram illustrating a method according to one embodiment of the invention;
**Figure 2A** discloses a view on a graphical user interface according to one embodiment of the invention;
**Figure 2B** discloses a view on a graphical user interface according to another embodiment of the invention;
**Figure 2C** discloses a view on a graphical user interface according to another embodiment of the invention; and
**Figure 3** discloses a block diagram of an apparatus according to one embodiment of the invention.

### DETAILED DESCRIPTION OF THE INVENTION

Reference will now be made in detail to the embodiments of the present invention, examples of which are illustrated in the accompanying drawings.

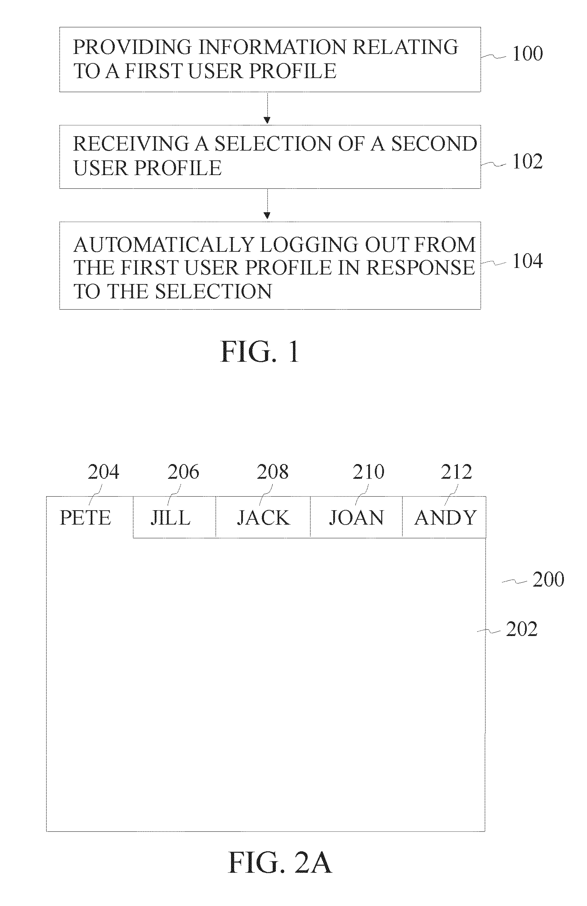

Figure 1 discloses a block diagram illustrating a method according to one embodiment of the invention. The method is applicable to any environment when user profiles or user accounts have been assigned to users. At step 100 information relating to a first user profile is provided on a graphical user interface. At step 102 a selection of a second user profile is received. The selection may result in a fact that another user wishes to use the same device than the previous user. At step 104 the first user profile is automatically logged out in response to the selection. In other words, there is no need for the first user using the first user profile to manually select a separate logout button (or other similar button) from the graphical user interface. When the first user (or a subsequent user) selects the desired user profile, the first user profile is automatically logged out.

Figure 2A discloses a view on a graphical user interface according to one embodiment of the invention. The view 200 comprises five different selectable user profiles 204-212. In Figure 2A a user profile "Pete" 204 is the currently active user profile. A user may customise his user profile to display wanted pieces of information on a user profile window 202. For example, the user may configure certain information feeds to be automatically displayed on the user profile window 202, shortcuts to most used applications can be located in a certain part of the user profile window 202 etc.

When Pete wishes to logout and Jack wishes to log in, either of them selects the user profile "Jack" 208, for example, by selecting "Jack" with a pointing device. The selection has the effect that the user profile "Pete" 204 is automatically logged out without further user actions.

The solution disclosed in Figure 2A makes it possible to switch between different user profiles quickly and easily.

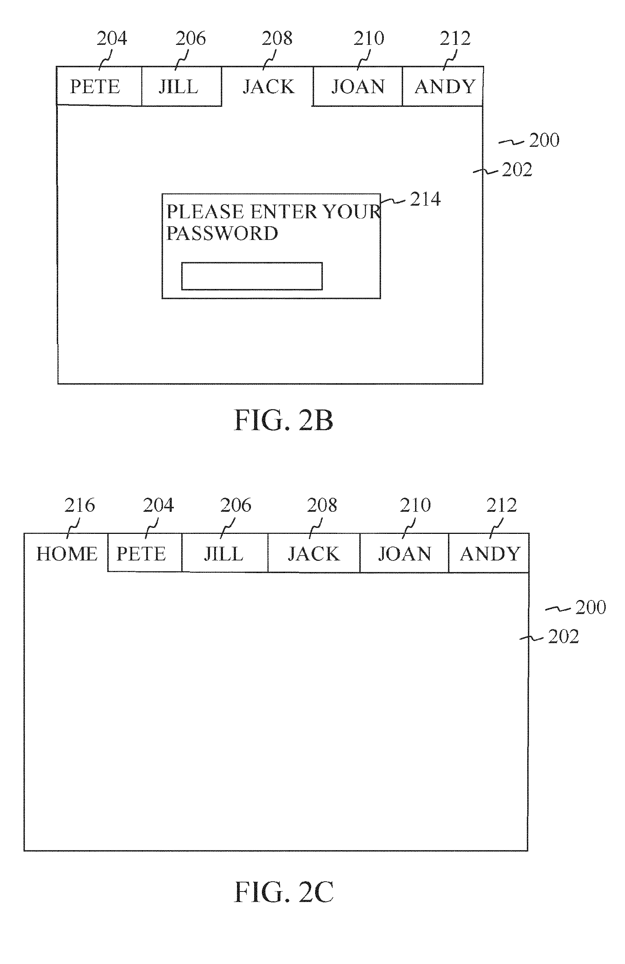

Figure 2B discloses a view on a graphical user interface after "Jack" 206 has been selected from Figure 2A. The selection of "Jack" 206 initiates a password input window 214 to appear on the view 200. When a correct password is received from the user via the password input window 214, the user is given access to the content of the user profile "Jack" 208.

In another embodiment of Figure 2B, when "Jack" 208 is selected, no password input window 214 appears and the user is directly given access to the user profile "Jack".

The solution disclosed in Figure 2B makes it possible to switch between different user profiles quickly and easily.

Although the new user was identified in Figure 2B based on a password, also other user identification procedures or methods can be used. For example, the user identification may be based on fingerprint identification, face detection or detection based on modeled user specific behavior (for example, or a user defined pattern input via a touch pad) etc.

Figure 2C discloses a view on a graphical user interface according to another embodiment of the invention. The user profile window 202 disclosed in Figure 2C differs from the user profile window in Figures 2A and 2B in that it includes a general "Home" user profile 216 which is commonly available for all users. When, for example, the user profile "Pete" 204 has been in use, and the user wishes to log out from this user profile, the user simply selects the home profile 216. The home profile 216 is a profile that can be used by all users and there is no user identification relating to it. In other words, the user does not have to input a password or to provide other user identification when selecting the home user profile 216. Similarly to the home profile 216, user profiles used by children may be determined to be usable without separate user identification. For example, "Joan" 210 could be a user profile for a 10 year old girl and it is accessible without separate user identification.

In one embodiment of Figure 2A, 2B or 2C, when an automatic logout procedure is performed and a new user profile is activated, one or more of the following actions may be performed. When a user profile is changed, content on the selected user profile window may be changed or updated or the view of the selected user profile window may be changed. Furthermore, a current connectivity status may be changed. For example, if a wireless connection has been used via a first user profile, the wireless connection may be automatically terminated when a second user profile is activated. Data relating to logout may also be communicated to a remote system for further processing or internally in the device for further processing. Furthermore, a most probable second user profile in the current situation may be activated, for example, based on collected behavioral data.

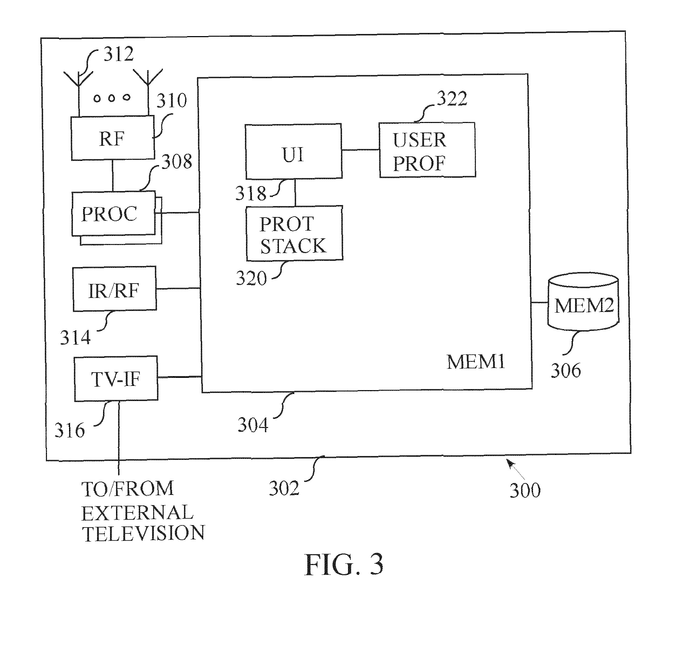

Figure 3 is a block diagram illustrating an apparatus according to one embodiment of the invention. The apparatus 300, which is, for example, a computer, a browser node, a mobile node, user equipment, a handset, a cellular phone or a mobile terminal. The apparatus 300 comprises means for providing, on a graphical user interface, information relating to a first user profile; means for receiving a selection of a second user profile; and means for automatically logging out from the first user profile in response to the selection.

Internal functions of the apparatus 300 are illustrated with a box 302. The apparatus 300 may comprise at least one antenna 310. There may also be multiple input and output antennas. In association with mobile node there may be a Radio Frequency (RF) circuit 312. In another embodiment, the at least one antenna 310 and the RF circuit 312 are optional elements of the apparatus 300. The RF circuit 312 may be also any circuit or may be referred to as circuit 310. RF circuit 310 is communicatively connected to at least one processor 308. Connected to the processor 308 there may be a first memory 304, which is, for example, a Random Access Memory (RAM). There may also be a second memory 306, which may be a non-volatile memory, for example, an optical or magnetic disk. There may also be an infrared or radio frequency (IR/RF) transmitter/receiver 314. There may also be an optional interface 316 to an external television (not shown).

In the memory 304 there may be stored software relating to functional entities 318 and 320. A user interface entity 318 may provide a graphical user interface to be displayed on a screen, e.g. on a television screen connected to the apparatus 300 via the interface 316. The user interface entity 318 may communicate with an external remote control unit (not shown) via the infrared or radio frequency (IR/RF) transmitter/receiver 314. The user interface entity 318 may communicate with a base station using a protocol stack 320. In another embodiment, the apparatus 300 may comprise network interface means other than the RF circuit 310.

In one embodiment of Figure 3, the apparatus 300 is connected to an external display device, for example, a television. The apparatus 300 is controlled via a remote control unit. With the remote control unit a user is able to navigate and use a graphical user interface shown on the display. With a pointing device (which may be integrated to the remote control unit), users are able to switch between user profiles, as disclosed in Figures 2A, 2B and 2C. In another embodiment, the apparatus comprises a display.

The remote control unit may include a button for switching between a browsing mode and a television viewing mode. In the browsing mode users are able to use the display as a graphical user interface. In the television viewing mode, the display is used to display television programs. If a user uses the browsing mode and it using a specific user profile, and when the user presses the button for switching between the browsing mode and the television viewing mode, the user is automatically logged out from the currently used user profile before switching to the television viewing mode.

A protocol stack entity 320 comprises control plane protocol functions related to the interface e.g. towards a base station such as, for example, a UMTS Node B. The protocol stack entity 320 may also comprise protocol functionalities related to user plane data communication with a content server. The protocol stack entity 320 may be, for example, an internet protocol stack.

When the at least one processor 308 executes functional entities associated with the invention, the memory 304 comprises entities such as, any of the functional entities 318 and 320. The functional entities within the apparatus 300 illustrated in Figure 3 may be implemented in a variety of ways. They may be implemented as processes executed under the native operating system of the network node. The entities may be implemented as separate processes or threads or so that a number of different entities are implemented by means of one process or thread. A process or a thread may be the instance of a program block comprising a number of routines, that is, for example, procedures and functions. The functional entities may be implemented as separate computer programs or as a single computer program comprising several routines or functions implementing the entities. The program blocks are stored on at least one computer readable medium such as, for example, a memory circuit, memory card, magnetic or optical disk. Some functional entities may be implemented as program modules linked to another functional entity. The functional entities in Figure 3 may also be stored in separate memories and executed by separate processors, which communicate, for example, via a message bus or an internal network within the network node. An example of such a message bus is the Peripheral Component Interconnect (PCI) bus.

The apparatus 300 may not always contain all the elements disclosed in Figure 3, and thus, these elements (for example, one or more from references 306, 310, 312, 314, 316) may be optional elements. Furthermore, in one embodiment, the apparatus 300 may comprise a display or an interface for connecting a display to the apparatus 300.

The exemplary embodiments of the invention can be included within any suitable device, for example, including any suitable servers, workstations, PCs, laptop computers, PDAs, Internet appliances, handheld devices, cellular telephones, wireless devices, other devices, and the like, capable of performing the processes of the exemplary embodiments, and which can communicate via one or more interface mechanisms, including, for example, Internet access, telecommunications in any suitable form (for instance, voice, modem, and the like), wireless communications media, one or more wireless communications networks, cellular communications networks, 3G communications networks, 4G communications networks Public Switched Telephone Network (PSTNs), Packet Data Networks (PDNs), the Internet, intranets, a combination thereof, and the like.

It is to be understood that the exemplary embodiments are for exemplary purposes, as many variations of the specific hardware used to implement the exemplary embodiments are possible, as will be appreciated by those skilled in the hardware art(s). For example, the functionality of one or more of the components of the exemplary embodiments can be implemented via one or more hardware devices, or one or more software entities such as modules.

The exemplary embodiments can store information relating to various processes described herein. This information can be stored in one or more memories, such as a hard disk, optical disk, magneto-optical disk, RAM, and the like. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be implemented by the preparation of one or more application-specific integrated circuits or by interconnecting an appropriate network of conventional component circuits, as will be appreciated by those skilled in the electrical art(s).

As stated above, the components of the exemplary embodiments can include computer program, computer programs or computer readable medium or memories according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computer-readable media can include, for example, a floppy disk, a flexible disk, hard disk, magnetic tape, any other suitable magnetic medium, a CD-ROM, CDRW, DVD, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

The embodiments of the invention described herein may be used in any combination with each other. Several of the embodiments may be combined together to form a further embodiment of the invention.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method, comprising:
providing, on a graphical user interface, information relating to a first user profile;
receiving a selection of a second user profile; and
automatically logging out from the first user profile in response to the selection.

2. The method according to claim 1, further comprising:
providing an identification procedure for the selected second user profile after logging out the first user profile;
receiving identification information for the second user profile; and
providing, on the graphical user interface, information relating to the second user profile when the received identification information is acceptable.

3. The method according to claim 1, further comprising:
providing, on the graphical user interface, information relating to the second user profile after logging out the first user profile.

4. A computer program comprising program code for implementing the method of any of claims 1 - 3.

5. The computer program of claim 4, wherein the computer program is embodied on a computer-readable medium.

6. An apparatus comprising:
means for providing, on a graphical user interface, information relating to a first user profile;
means for receiving a selection of a second user profile; and
means for automatically logging out from the first user profile in response to the selection.

7. The apparatus according to claim 6, further comprising:
means for providing an identification procedure for the selected second user profile after logging out the first user profile;
means for receiving identification information for the second user profile; and
means for providing, on the graphical user interface, information relating to the second user profile when the received identification information is acceptable.

8. The apparatus according to claim 6, further comprising:
means for providing, on the graphical user interface, information relating to the second user profile after logging out the first user profile.

9. The apparatus according to any of claims 6 - 8, comprising:
means for connecting to an external display.

10. The apparatus according to any of claims 6 - 8, comprising a display.
